Europäisches Patentamt

European Patent Office

Office européen des brevets

(11) Publication number: **0 127 311**
**B1**

# (12) EUROPEAN PATENT SPECIFICATION

(45) Date of publication of patent specification: **14.03.90**

(51) Int. Cl.⁵: **G 11 B 5/09**

(21) Application number: **84302757.4**

(22) Date of filing: **24.04.84**

(54) **Method of and controller for handling medium defects in a disc drive system.**

(30) Priority: **23.05.83 US 496863**

(43) Date of publication of application:
**05.12.84 Bulletin 84/49**

(45) Publication of the grant of the patent:
**14.03.90 Bulletin 90/11**

(84) Designated Contracting States:
**DE FR GB .**

(56) References cited:
**EP-A-0 046 323**
**EP-A-0 078 492**
**EP-A-0 083 475**
**WO-A-83/01334**
**WO-A-84/00628**
**GB-A-2 022 298**
**US-A-3 771 143**
**US-A-4 228 501**

**PATENT ABSTRACTS OF JAPAN, vol. 7, no.
73(P-186)1218r, 25th March 1983; & JP - A - 58
003 104**

(73) Proprietor: **DATA GENERAL CORPORATION
Route 9
Westboro Massachusetts 01581 (US)**

(72) Inventor: **Caldara, Stephen A.
7 Alden Road
Wayland Massachusetts 01778 (US)**

(74) Representative: **Pears, David Ashley et al
REDDIE & GROSE 16 Theobalds Road
London WC1X 8PL (GB)**

Courier Press, Leamington Spa, England.

# EP 0 127 311 B1

**Description**

The present invention relates generally to disc drive systems and more particularly to an improved method and controller for handling medium defects, i.e. defects on the disc surfaces, in such disc drive systems.

Disc drive systems are well known in the art and commonly used as peripheral data storage devices in data processing systems. These discs, or platters as they are often called, are constructed to have a plurality of concentric rings or tracks on each surface and the digital information is stored on these tracks. Information is written onto a track or read off a track through a head, which is positioned over an appropriate location on track and moved in and out readily, as desired, to go from one track to another.

Logically, these discs are also divided into a plurality of sectors and a separate block of digital information is stored in each sector on a track. Thus, the locations for storing data can be identified or addressed in terms of the particular disc, the particular surface (top or bottom) on the disc, the particular track and the particular sector on the disc surface. In most prior art disc drive systems, the sectors are assigned addresses defining their physical locations in this manner.

In the course of manufacturing the discs, small defects will occur on the disc surfaces. For example, in the case of magnetic cases, i.e. discs coated on one or both of their surfaces with a layer of magnetic material similar to that used on magnetic tape, there may be small areas in which there is an insufficient amount of magnetic material. This results in areas in which data cannot be stored. If the width of a track is large relative to the width of a defective area, the defect may not make the sector where it is located non-useable. However, if the width of a defective area is as large or larger than the width of a track, the sector where the defect is located will in most all cases be non-useable. As disc technology has advanced, the track widths of discs have become increasingly smaller. As a result, a disc surface on a disc having high track densities will usually contain one or more sectors containing defects and not be useable for storing data.

In the past, the problem of medium defects on a disc has been handled very often by allocating a certain number of tracks on each disc surface near the centre of the disc as spares to serve as alternative locations for the non-useable sectors. When the head of the disc drive system is at a defective sector, the disc drive system controller, on notification thereof through an appropriate flag, will move the head radially inward to the track containing the alternative location for that sector, cause the head to read or write the data at that alternative and then move the head radially outward to the original track where it was located. One of the disadvantages of this technique for handling defective sectors is that the movement of the head is slow relative to the speed of rotation of the disc. Consequently moving the head radially inward to one of the spare tracks and then back outward to the original track·will produce a time delay, which is undesirable. Another problem with this approach is that the number of tracks allocated as spares, such as two, is usually fixed and cannot be changed according to the requirements of a particular platter. For example, if a disc has only a few or no defective sectors, the spare tracks or portions thereof will be effectively wasted. On the other hand, after a period of time, the number of defective sectors may exceed the number of spare sectors that are available to handle defective sectors.

Another technique that has been employed to handle defective sectors has involved allocating one or more outer (as opposed to inner) tracks on a disc surface as spare tracks. Although physically different, this approach also suffers from the short comings noted above.

In US—A—3771143 there is disclosed a technique to handle defective sectors by clustering all spare sectors belonging to a cylinder on only one disk surface, especially at the first track of each cylinder.

Yet another known method (W083/01334) provides spare sectors at the end of each track and adjusts logical addresses so as to strip defective sectors. The sectors subsequent to a bad sector are slid down into the spare sector region. This is possible only up to the limit imposed by the number of spare sectors.

It is another object of this invention to provide an improved method of the kind disclosed in W083/01334 which enables a given number of spare sectors to be utilized most efficiently.

The method according to the invention is defined in claim 1 below.

It is a further object of this invention to provide an improved controller for implementing the method defined in Claim 1.

The disc controller according to the invention is defined in Claim 5.

An advantage of the method according to the invention is that the number of spare sectors is programmable and can be easily changed.

The disc sectors are always accessed contiguously but only those sectors with logical addresses are used in data transfers which take place on the basis of logical rather than physical addresses.

Another technique that has been employed to handle defective areas has involved increasing the overall length of a sector so that even if it may contain a small defect over a portion thereof, it does not necessarily render the entire sector non-useable for storing a block of data. Although this technique eliminates having to move the heads radially inward or outward to tracks having alternative sector locations, it reduces the total number of sectors in a track on a disc and hence the amount of data that can be stored.

In US Patent 4,228,501 there is disclosed a technique for transferring data between a host central processor and a disc drive system wherein the differences in time required to transfer data to or from the

2

disc drive system and the time required to transfer data to or from the host central processor are accommodated by placing data from the disc drive system into a temporary buffer storage element. In addition, the sectors are addressed in a logical manner. In particular, each third physical sector on the disc is designated as the next sequential logical sector.

It will be understood that the present invention is based on the concept of by-passing or skipping over defective sectors. Each surface on each disc in the disc drive system is divided into a number of tracks or concentric rings with the tracks on the disc at the same radial distance from the centre defining a cylinder. Each surface on each disc is further divided into a plurality of sectors, each of which may be used to store a block of data if not defective. Each defect-free sector in each cylinder is assigned a logical address in sequential order such that as the sectors pass under the heads of the disc drive system as the discs rotate and as the head address increments within a cylinder, each succeeding defect-free sector within that cylinder has a logical address which is generated from the logical address of the preceding defect-free sector. Defective sectors are labelled with an appropriate unique pattern in their headers so that they can be easily identified and distinguished from logical address numbers. A predetermined number of sectors at the end of each cylinder are allocated as spares to compensate for non-useable sectors, the number being at least as large as the number of potentially defective sectors in a cylinder. Thus, in any one cylinder there will be a predetermined number of sectors having logical addresses. In using the technique, each defect-free sector is first identified and then assigned its logical address. In reading or writing information, the header address of a sector is compared with the logical address expected at that sector. If they match, the data at that sector is transferred. If the header information and expected logical address do not match the header address at the next physical sector is compared with the expected logical address. The procedure is continued as long as there is a mis-match. If, however, the sequence of mis-matches exceeds a predetermined number, the sequencing operation is terminated and an error signal generated.

The invention may be embodied in a controller which, amongst other things, controls the transfer of data between the disc drive system and a main memory in a data processing system. The controller includes a data buffer for temporary storage of header information of a current sector in the disc drive system, an expected disc address register in which may be placed the expected logical address for that sector location, a next disc address generator for generating the next expected logical address which is placed into the expected disc address register after a data transfer has been made, comparison means for comparing the header information in the data buffer with the logical address in the expected disc address register and sequencing logic coupled to the comparison means for either signalling the disc drive system to transfer data, signalling the disc drive system to end a transfer of signalling the next disc address generator to inhibit generating the next logical address to be placed in the expected disc address register while the header information at the next physical sector is placed into the data buffer and compared by the comparison means with the logical address at present in the next disc address register.

The invention will be described in more detail, by way of example, with reference to the accompanying drawings, in which:

Fig. 1 is a view of a portion of a disc,

Fig. 2 is a block diagram of a system embodying the present invention;

Fig. 3 is a flow chart illustrating the invention,

Fig. 4 is a schematic diagram of some of the main components in the sequencing logic in the controller shown in Fig. 2,

Fig. 5 is a schematic diagram of some of the other main components in the sequencing logic shown in Fig. 2; and

Figs. 6 and 7 are schematic views of certain other components in the controller in the apparatus of Fig. 2.

The present invention is directed to a novel technique for treating defects in the disc surfaces in a disc drive system. The technique involves assigning each sector in a cylinder that does not contain a defect a logical address number in sequential order so that as the sectors within a cylinder pass under the heads in the disc drive system each succeeding defect-free sector has a logical address that is generated in accordance with a predetermined algorithm from the logical address of the preceeding defect-free sector.

As examples, the sequence of logical addresses may be such that each succeeding defect-free sector has a logical address one greater than the logical address of the preceeding defect-free sector or a logical address one less than the logical address of the preceeding defect-free sector or a logical address greater or less than the preceeding defect-free sector by some other constant value. Also, a pseudo-random sequencing of logical addresses may be employed.

In order to allow for defective and hence non-used sectors, a predetermined but variable number of spare sectors chosen is at least as large as the maximum number of defective sectors that may be present in a cylinder, this information being supplied by the manufacturer of the discs. Thus, each cylinder will have a predetermined number of useable sectors having logical addresses. In using the technique, an address (in the header) of a sector is compared with an expected (logical) address for the sector at that physical location. If the two addresses match, the data is read from or written into the sector, as desired. If the two addresses do not compare, the address at the next physically located sector is compared with the same expected (logical address). The process is continued until there is either a match or the number of mis-matches exceeds a predetermined arbitrary number. If the number of mis-matches exceeds the predetermined arbitrary number, the sequencing is terminated and an error signal emitted.

The invention is not limited to any particular disc drive system, is not limited to any particular type of discs (i.e. hard or "floppy", magnetic or non-magnetic), is not limited to any particular size discs and is not limited to disc drive systems having more than one disc. Also, the invention applies to discs in which data is stored on one surface or on both surfaces.

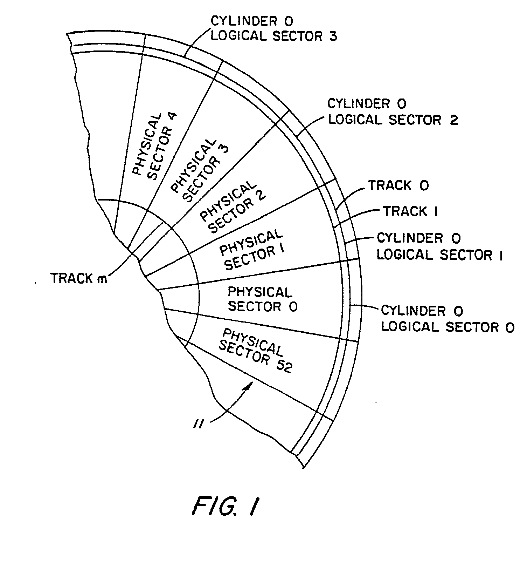

In Fig. 1, there is shown a portion of the top surface disc 22, the disc being, for illustrative purposes, of the type on which data is stored on the top surface and on the bottom surface. Disc 11 can be divided into a number (n) of tracks, three such tracks being shown and labelled Track 0, Track 1 and Track "m". Each track can be further divided into a plurality of separate physical sectors on each of which a block of data words can be stored. For example, the surface shown of disc platter 11 may comprise 53 physical sectors, identifiable as physical sectors 0—52, some of which are shown in the portion illustrated in Fig. 1 and labelled Physical Sector 52, Phyiscal Sector 0, Physical Sector 2, etc.

The top and bottom surface of disc 11 can also be identified numerically. In a disc drive system containing a plurality of discs arranged in a stack, the tracks on all disc surfaces at the same radial distance from the centre will collectively define a cylinder. Thus, the outermost tracks on all surfaces (i.e. tracks 0) may be defined collectively as cylinder 0, the next tracks as cylinder 1, and so forth. For example, if each disc contains 880 tracks there will be 880 cylinders, each cylinder including the corresponding track on each disc surface. Thus, each location on which data can be stored can be addressed in terms of its disc number, surface, cylinder and sector. Usually, the disc number and surface will be combined into a single number called the head number; that is, the top surface of the first disc will be numbered 0, the bottom surface of the first disc numbered 1, the top surface of the next disc numbered 2 and so forth. In the general case a cylinder consists of $n$ tracks on $n$ surfaces where $n$ is 1 or a larger integer.

According to the technique of this invention, a plurality of sectors, such as fourteen, at the end of each cylinder, are allocated as spares and each remaining sector in each cylinder that does not contain a defect is assigned a logical address number in sequential order. In the specific example herein described the logical addresses are such that each succeeding defect free sector has a logical address one larger than the preceeding defect-free sector. The number of spare sectors is at least as larger as the number of potentially defective sectors in a cylinder according to the disc manufacturer's specifications. The logical address designations for this specific example may be better understood in the chart below of a single cylinder 0 in a multi-disc system having 880 cylinders, $n=16$ heads (8 discs) and 53 sectors per disc, with defective sectors at head 0, physical sector 3; head 0, physical sector 7; head 1, physical sector 7; and head 1, physical sector 8. Thus, if there are fourteen spare sectors, the number of defective sectors in that cylinder, according to the manufacturer's specification is no greater than fourteen.

| Head number | Physical sector number | Logical sector number |
|---|---|---|
| 0 | 0 | 0 |
| 0 | 1 | 1 |
| 0 | 2 | 2 |
| 0 | 3 (Defective) | (None assigned) |
| 0 | 4 | 3 |
| 0 | 5 | 4 |
| 0 | 6 | 5 |
| 0 | 7 (Defective) | (None assigned) |
| 0 | 8 | 6 |
| 0 | 9 | 7 |
| 0 | 10 | 8 |
| . | . | . |
| . | . | . |
| . | . | . |
| 0 | 52 | 50 |
| . | . | . |
| . | . | . |
| . | . | . |
| 1 | 6 | 57 |
| 1 | 7 (Defective) | (None assigned) |
| 1 | 8 (Defective) | (None assigned) |
| 1 | 9 | 58 |

As can be seen, since head 0, physical sector 3 is defective it does not contain a logical sector number. Instead, logical sector number 3, which would have been assigned to head 0, physical sector 3 if it was not effective, is assigned to head 0, physical sector 4. Since there are 4 defective·physical sectors, the first four of the last fourteen physical sectors will contain logical addresses (the last four logical addresses for the cylinder) and the remaining ten spare sectors will remain unused. The logical addresses for some of the sectors on cylinder 0, head 0, track 0, with defects as noted above, are also shown on Fig. 1.

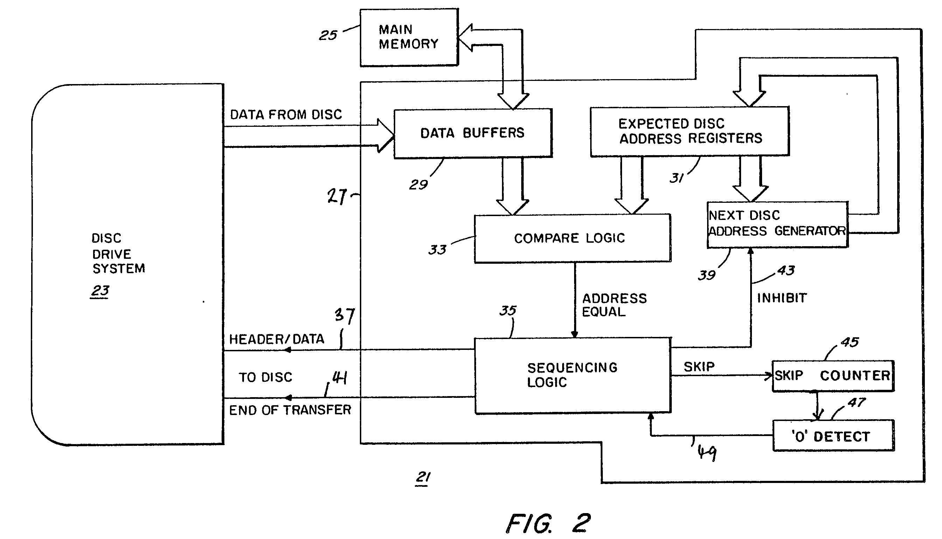

A system 21 for implementing the technique of the invention is shown in Fig. 2.

System 21 includes a disc drive system 23 having at least one magnetic disc (not shown) for storing data, a main memory 25 and a controller 27 for controlling the transfer of data between disc drive system 23 and main memory 25. For simplicity, portions of controller 27 not pertinent to the invention are not shown. Controller 27 includes data buffers 29 which receive header information (i.e. the address of a sector) from disc drive system 23, and a set of expected disc address registers 31 for holding a logical expected address of a sector within a cylinder. System 21 further includes a compare logic 33 for comparing the address currently in data buffers 29 with the address in expected disc address registers 31. Compare logic 33 outputs either a match (equal) signal or a non-match (not equal) signal. This signal is sent to a sequencing logic 35.

If the signal is "match" then the head of the disc drive system 23 is at the physical sector location corresponding to the logical sector address and a signal is sent to disc drive system 23 over line 37 to transfer data. The header information at the next physically located sector is then fed into data buffers 29.

At the same time, expected disc address registers 31 is incremented by a next disc address generator 39 to the next logical address and the comparison repeated. (If the logical address sequence were in a decreasing rather than an increasing order, then the address in registers 31 would be decremented by the next disc address generator 39). The procedure is continued as long as the addresses match until the data message is transferred. After the transfer has been completed a signal is sent to disc drive system 23 over line 41 to end the transfer.

On the other hand, if the signal compare logic 33 outputs a "non-match" signal to sequencing logic 35, a signal is sent to a next disc address generator 43 over line 43 to inhibit incrementing the expected disc address registers 31 and the logical address at present in the expected disc address registers 31 is compared with the address at the next physically located sector. At the same time a skip counter 45 previously set to a predetermined number, such as eight, is decremented. If the count reaches zero, an error signal is sent out over line 49 by a signal detector 47 to the sequencing logic to terminate the sequencing. Alternatively, the counter could be constructed to increment rather than decrement and the detector device constructed to emit a signal after the counter has incremented to a predetermined number.

The predetermined number in the counting mechanism is chosen such that it is greater than the maximum number of defective sectors which may be present in a cylinder and thus greater than the maximum number of skips that may be needed to line up the proper physical sector with its logical address.

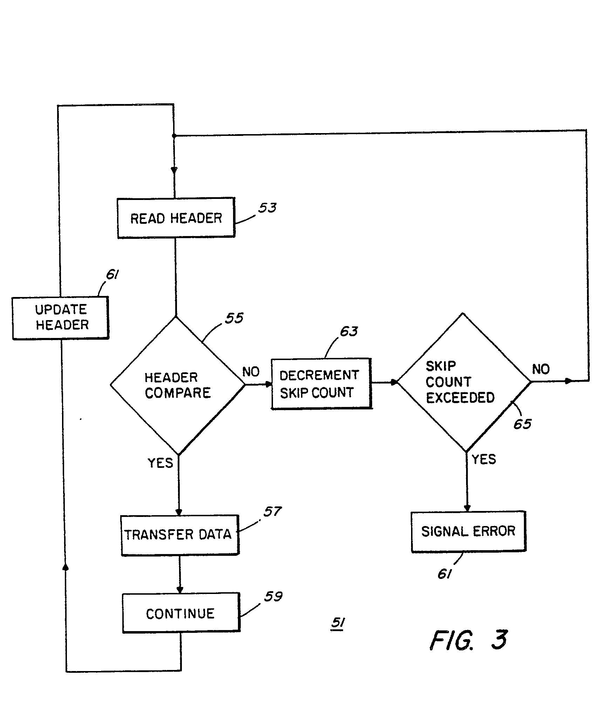

In Fig. 3 there is illustrated a flow chart 51 of the procedure described above. The header of a current sector on a track is read, at block 53, and compared with a logical address, at block 55.

If there are no defective sectors before the current sector, the logical address will be at the corresponding physical location and the addresses will compare. Data is then transferred at block 57, and the procedure continued, at block 59 by updating the header to the next physical location, at block 61, incrementing the logical address, and then reading the header at that next physical sector, at block 53.

If there are previous sectors that are defective, or, if the sector being read is defective the addresses will not compare. In this case, the skip counter is decremented, at block 63 and an inhibit signal is sent out to inhibit incrementing of the logical address. If the maximum skip count is exceeded, at block 65, an error signal is sent out at block 67.

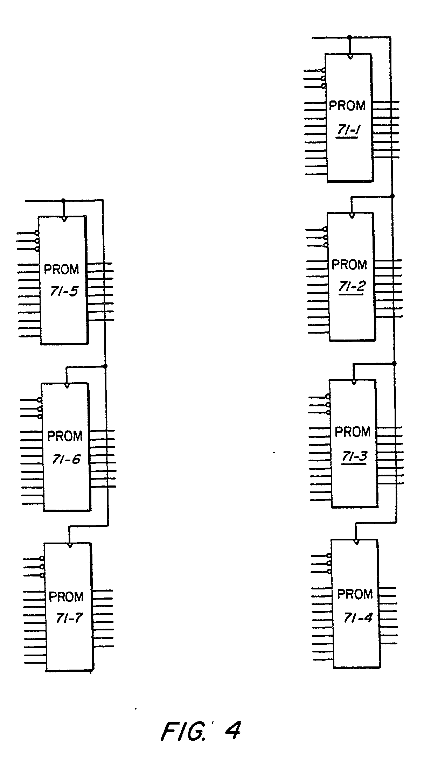

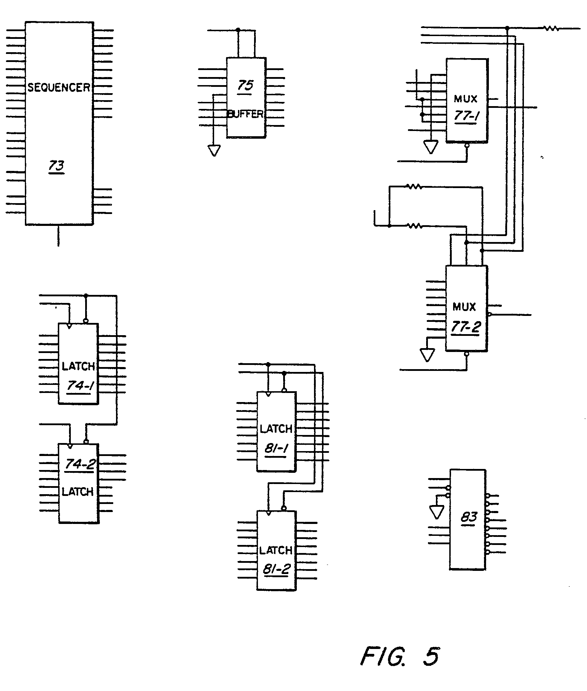

In Figs. 4 and 5 are illustrated some of the components of sequencing logic 35.

These components include seven PROMS numbered 71-1 to 71-7 which contain the microcode listings of the program for use in the invention, a sequencer chip 73 which drives the addresses to PROMS 71, and 8 bit buffer 75 for holding the error status, a pair of multiplexers 77-1 and 77-2 signalling the condition of the skip count to the sequencer, a pair of 8-bit latches 79-1 and 79-2 which give the starting addresses to sequencer chip 73, a pair of 8-bit latches 81-1 and 81-2 which load numerical constants into sequencer chip 73 and a decoder chip 83 which drives the logic in the circuit.

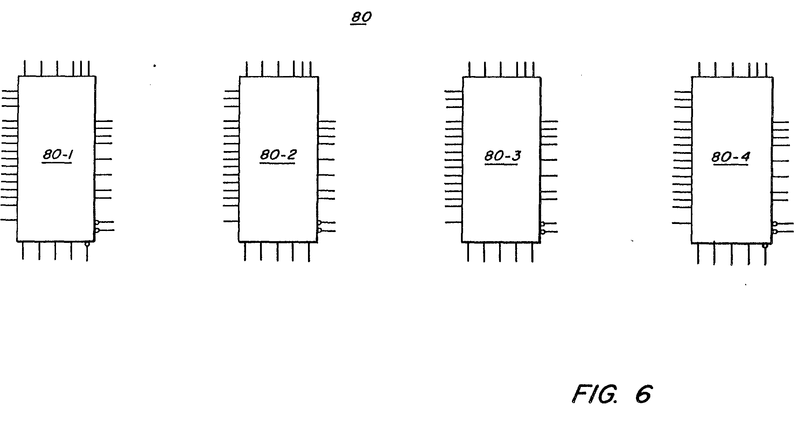

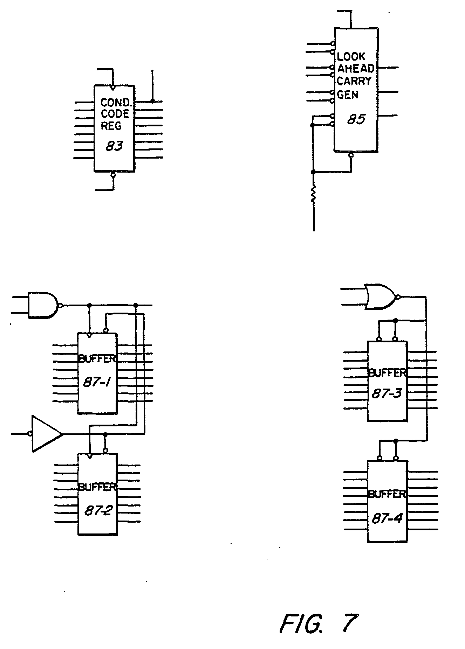

In Fig. 6 and 7 are illustrated additional components in controller 27.

These components include a data processor 80 having four chips 80-1, 80-2, 80-3, and 80-4, condition code register 83 which maintains the status of skip counter 45, a "look ahead" carry generator 85 which speeds up the operation of the data processor 80 and four 8 bit buffers 87-1 and 87-2, 87-3 and 87-4 which buffer data to and from data processor 80.

## Claims

1. A method of handling medium defects in a disc drive system of the type wherein data is recorded in sectors arranged in circular tracks on a plurality of disc surfaces and further arranged in a plurality of cylinders, each comprising the tracks having the radius of the cylinder on the plural disc surfaces, wherein physically consecutive sectors have logical addresses related in accordance with a predetermined algorithm, wherein the sectors include spare sectors, the logical addresses are assigned to defect-free sectors, skipping defective sectors so that each defect-free sector has its logical address determined in accordance with the said algorithm from the logical address of the immediately preceding defect-free sector, and data read and write operations are conducted using only the sectors with the logical addresses, characterized in that the spare sectors are clustered at the ends of the cylinders, sectors of the cylinders are utilized in an order proceeding towards the said ends of the cylinders and spare sectors of each cylinder are utilized to make up for the number of defective sectors skipped in that cylinder to provide a predetermined number of utilized, defect-free sectors in each cylinder.

2. A method according to Claim 1, characterised in that the logical addresses are recorded in the defect-free sectors, the expected next logical address is computed from the current logical address, compared with the logical address read from the next sector until a match occurs, and so on iteratively, and data read and write operations are conducted in accordance with the logical addresses when matches occur.

3. A method according to Claim 2, characterised in that the number of mis-matches is counted for each expected logical address and an error is signalled if the counted number reaches a predetermined value.

4. A method according to claim 1, 2 or 3, characterised in that the predetermined algorithm consists in incrementing logical addresses by one.

5. A disc controller for implementing a method according to Claim 1 and comprising a buffer (29) for receiving data read from a disc, including a disc sector logical address, characterised by a register (31) for an expected next logical address, a next address generator (39) for generating the new expected next logical address from the current expected next logical address, in accordance with the predetermined algorithm, a comparator (33) for comparing the logical addresses in the buffer (29) and the register (31), and sequencing logic (35) controlling read and write operations in accordance with the logical addresses when the comparator (33) signals a match, the sequencing means allowing the next address generator (39) to operate each time a match occurs but not when a mismatch occurs.

6. A disc controller according to Claim 5, characterised by means (45) for counting mismatches and means (47) which signal an error if the count of mismatches on any expected next logical address reaches a predetermined value.

**Patentansprüche**

1. Verfahren zur Behandlung von Fehlern des Aufzeichnungsträgers bei einem Plattenspeichersystem, bei die Daten in Sektoren aufgezeichnet werden, die in kreisförmigen Spuren auf einer Vielzahl von Plattenoberflächen und in einer Vielzahl von Zylindern angeordnet sind, die jeweils diejenigen Spuren enthalten, die auf der Vielzahl der Plattenoberflächen den Zylinderradius aufweisen, wobei körperlich aufeinanderfolgende Sektoren Adressen besitzen, die mit einem vorgewählten Algorithmus in Beziehung stehen, die Sektoren Ersatzsektoren enthalten, die logischen Adressen fehlerfreien Sektoren zugeordnet sind, fehlerhafte Sektoren übersprungen werden, so daß die logische Adresse jedes fehlerfreien Sektors in Übereinstimmung mit dem vorgewählten Algorithmus durch die logische Adresse des unmittelbar vorangehenden fehlerfreien Sektors bestimmt ist, und Datenschreib- und Datenlese-Operationen nur unter Benutzung der die logischen Adressen aufweisenden Sektoren durchgeführt werden, dadurch gekennzeichnet, daß die Ersatzsektoren an den Enden der Zylinder zusammengefaßt sind, die Sektoren der Zylinder in einer Ordnung benutzt werden, die in Richtung der Enden der Zylinder fortschreitet, und die Ersatzsektoren jedes Zylinders als Ersatz für die Zahl der fehlerhaften Sektoren benutzt werden, die in diesem Zylinder übersprungen werden, um dadurch eine vorgewählte Anzahl von benutzten, fehlerfreien Sektoren in jedem Zylinder zu erhalten.

2. Verfahren nach Anspruch 1, dadurch gekennzeichnet, daß die logischen Adressen in den fehlerfreien Sektoren aufgezeichnet werden, die nächste erwartete logische Adresse aus der derzeitigen logischen Adresse berechnet und mit der vom nächsten Sektor gelesenen logischen Adresse verglichen wird, bis sich Übereinstimmung ergibt, usw. iterativ, und die Datenschreib- und Daten lese-Operationen entsprechend den logischen Adressen durchgeführt werden, wenn sich Übereinstimmung ergibt.

3. Verfahren nach Anspruch 2, dadurch gekennzeichnet, daß die Zahl der Nicht-Über einstimmungen für jede erwartete Adresse gezählt und ein Fehlersignal erzeugt wird, wenn die gezählte Anzahl einen vorgewählten Wert erreicht.

4. Verfahren nach Anspruch 1, 2 oder 3, dadurch gekennzeichnet, daß der vorgewählte Algorithmus in einer Inkrementierung der logischen Adressen um eins besteht.

5. Steuereinrichtung zur Durchführung des Verfahrens nach Anspruch 1 mit einem Zwischenspeicher (29) zur Aufnahme von Daten, die von einer Platte gelesen werden und ein logische Plattensektoradresse enthalten, gekennzeichnet durch ein Register (31) für eine nächste erwartete logische Adresse, einen Adressengenerator (39) zur Generierung der nächsten erwarteten logischen Adresse aus der gerade erwarteten Adresse nach einem vorgewählten Algorithmus, einen Komparator (33) zum Vergleich der logischen Adressen im Zwischenspeicher (29) und im Register (31), und eine Ablauflogik (33), die Schreib- und Leseoperationen entsprechend den logischen Adressen steuert, wenn der Komparator (33) eine Übereinstimmung angibt, und die den Adressengenerator (39) jedesmal, wenn eine Übereinstimmung erscheint, arbeiten läßt, dies jedoch verhindert, wenn sich keine Übereinstimmung ergibt.

6. Steuereinrichtung nach Anspruch 5, gekennzeichnet durch Mittel (45) zum Zählen der Nicht-Übereinstimmungen und Mittel (47), die einen Fehler signallisieren, wenn die Zahl der Nicht-Übereinstimmungen im Hineblick auf die nächsten erwarteten Adressen einen vorgewählten Wert erreicht.

**Revendications**

1. Procédé pour traiter des défauts du support d'information dans une unité de disques du type où l'information est enregistrée dans des secteurs disposés en pistes circulaires sur des faces de disques, ainsi qu'en cylindres, comprenant chacun les pistes ayant le rayon du cylindre concerné sur les différentes faces des disques, dans lequel des secteurs physiquement consécutifs ont des adresses logiques corrélées suivant un algorithme prédéterminé, et dans lequel les secteurs comportent des secteurs de réserve, les adresses logiques sont affectées à des secteurs exempts de défauts, de manière que chaque secteur dans défaut soit doté d'une adresse logique déterminée conformément audit algorithme à partir de l'adresse logique du secteur sans défaut qui le précède immédiatement, et les opérations de lecture et d'écriture de données sont effectuées en utilisant seulement les secteurs dotés des adresses logiques, caractérisé en ce que les secteurs de réserve sont rassemblés aux extrémités des cylindres, les secteurs des cylindres sont utilisés suivant un ordre progressant vers lesdites extrémités des cylindres et les secteurs de réserve de chaque cylindre sont utilisés pour compenser le nombre de secteurs défectueux éliminés dans ce cylindre, de façon que chaque cylindre soit pourvu d'un nombre prédéterminé de secteurs, utilisés, qui n'ont pas de défauts.

2. Procédé selon la revendication 1, caractérisé en ce que les adresses logiques sont enregistrées dans les secteurs exempts de défauts, l'adresse logique suivante prévue est calculée à partir de l'adresse logique en cours, comparée avec l'adresse logique lue du secteur suivant, jusqu'à ce qu'il y ait concordance, et ainsi de suite, de façon itérative, et les opérations de lecture et d'écriture de données sont effectuées en conformité avec les adresses logiques lorsque des concordances se produisent.

3. Procédé selon la revendication 2, caractérisé en ce que le nombre de discordances est compté pour chaque adresse logique prévue et une erreur est signalée si le nombre compté atteint une valeur prédéterminée.

4. Procédé selon la revendication 1, 2 ou 3, caractérisé en ce que l'algorithme prédéterminé consiste à incrémenter les adresses logiques de un.

5. Dispositif de commande de disques pour la mise en oeuvre du procédé selon la revendication 1, comprenant un tampon (29) pour recevoir des données lues d'un disque, possédant une adresse logique de secteur de disque, caractérisé par un regsitre (31) pour une adresse logique prévue ensuite, un générateur (39) d'adresse de disque suivante, destiné à générer la nouvelle adresse logique prévue ensuite à partir de l'adresse logique suivant prévue au moment considéré, conformément à l'algorithme pr-déterminé, un comparateur (33) pour comparer les adresses logiques dans le tampon (29) et le registre (31), ainsi qu'une logique de séquencement (35) commandant les opérations de lecture et d'écriture en conformité avec les adresses logiques lorsque le comparateur (33) single une concordance, le moyen de séquencement autorisant le générateur (39) d'adresse suivante de devenir effectif chaque fois qu'une concordance a lieu, mais n'autorisant pas le fonctionnement de ce générateur s'il se produit une discordance.

6. Dispositif de commande de disques selon la revendication 5, caractérisé par un moyen (45) pour compter les discordances et des moyens (47) qui signalent une erreur si le nombre de discordances pour toute adresse logique suivante prévue atteint une valeur prédéterminée.

FIG. 1

FIG. 2

FIG. 3

*FIG. 4*

FIG. 5

FIG. 6

FIG. 7